# EUROPÄISCHE PATENTSCHRIFT

(11) **EP 3 028 919 B1**
(45) Veröffentlichungstag und Bekanntmachung des Hinweises auf die Patenterteilung: **26.04.2017**
(21) Anmeldenummer: 14196337.1
(22) Anmeldetag: 04.12.2014
(51) Int. Cl.: B61G 5/02, B60D 5/00

(54) **Gelenk eines Gelenkfahrzeugs**
Joint of an articulated vehicle
Articulation pour véhicule articulé

(43) Veröffentlichungstag der Anmeldung: 08.06.2016
(73) Patentinhaber: Hübner GmbH & Co. KG, 34123 Kassel (DE)
(72) Erfinder: Krug, Lars, 34376 Immenhausen (DE); Mander, Kai, 34466 Wolfhagen (DE); Krehwinkel, Thomas, 34119 Kassel (DE); Busch, Thomas, 34359 Reinhardshagen (DE); Naploszek, Hartwig, 45289 Essen (DE); Scharf, Lothar, 37242 Bad Sooden-Allendorf (DE)
(74) Vertreter: Patentanwälte Walther Hinz Bayer PartGmbB

(56) Entgegenhaltungen:
- EP-A1- 1 925 523
- DE-B3-102010 046 495
- US-A- 4 867 071
- US-A- 5 615 786

## Beschreibung

Die Erfindung betrifft ein Gelenk eines Gelenkfahrzeugs, umfassend ein männliches und ein weibliches Gelenksegment, die durch einen Zapfen und durch eine elastische nachgiebige Gelenkeinrichtung miteinander verbunden sind.

Ein aus mehreren Teilen kuppelbares Gelenkfahrzeug ist aus dem Stand der Technik hinreichend bekannt. Die Teile eines solchen Gelenkfahrzeuges sind durch ein Gelenk miteinander gekuppelt. Das Gelenk wird hierbei üblicherweise durch einen Balg überspannt, wobei zum Hinüberwechseln von Personen von dem einen zu dem anderen Fahrzeugteil eine Übergangsbrücke vorgesehen ist.

Der Begriff des Gelenkes umfasst im vorliegenden Fall die gesamte Anordnung zwischen den beiden Fahrzeugteilen. Bekanntermaßen werden Gelenkfahrzeuge den unterschiedlichsten Bewegungsarten unterworfen. So müssen die Gelenke in Abhängigkeit des Einsatzzweckes bei einem Gelenkbus oder einem Schienenfahrzeug in der Lage sein, sowohl Wank-, Nick-, als auch Knickbewegungen aufzunehmen. Unter Wankbewegungen versteht man solche Bewegungen, bei denen sich die beiden Fahrzeugteile relativ zueinander um eine Längsachse verdrehen. Knickbewegungen sind solche, die auftreten, wenn das Gelenkfahrzeug mit den beiden Fahrzeugteilen um eine Kurve fährt, wohingegen Nickbewegungen entstehen, wenn ein solches Gelenkfahrzeug durch eine Senke oder über eine Kuppe fährt. Darüber hinaus gibt es Versatzbewegungen, wenn Schienenfahrzeuge z. B. über eine S-förmige Weiche fahren.

Eine bekannte Gelenkverbindung, die die genannten Bewegungsarten und auch überlagerte Bewegungsarten zulässt, umfasst ein sogenanntes Drehkranzgelenk mit zwei drehbar ineinander gelagerten Ringen, wobei einer der Ringe, meist der innere Ring, dem vorderen Wagen und der zweite Ring, meist der äußere Ring, dem hinteren Wagen zugeordnet ist. Hierbei stützt sich der äußere Ring auf dem inneren Ring ab, wobei die beiden Ringe um eine vertikale Achse gegeneinander verdrehbar sind, um Knickbewegungen beider Fahrzeuge nachgeben zu können, wenn das Fahrzeug z. B. eine Kurve durchfährt.

Nickbewegungen werden dadurch ermöglicht, dass eines der Fahrzeugteile an einem der beiden Drehringe an quer zur Fahrzeuglängsachse ausgerichtete gummigelagerte Bolzengelenke angeschlossen ist. Meist ist dies der vordere Wagen, der durch solche Metallgummilager mit dem entsprechenden Drehring des Drehkranzgelenkes verbunden ist.

Vorteilhaft sind insofern beiderseits der Mittellängsachse zwei Metallgummilager vorgesehen, die jeweils einen Achsbolzen aufweisen, der quer zur Längsachse des Fahrzeugs ausgerichtet ist. Der Achsbolzen ist hierbei von einer Gummihülse umgeben, die von einem Hülsenmantel umgeben ist, wobei der Achsbolzen die Verbindung mit einem Drehring herstellt und die Hülse die Verbindung mit dem Fahrzeugteil.

Auftretende Wankbewegungen werden zum einen von dem Fahrzeugchassis und zum anderen von dem Metallgummilager aufgenommen.

Aus der EP 1 916 181 A2 ist des Weiteren ein Knickgelenk bekannt, das zwei Gelenksegmente aufweist, wobei die beiden Gelenksegmente durch ein Knicklager in Form eines Drehlagers miteinander in Verbindung stehen. Das eine Gelenksegment ist hierbei an dem einen Wagenkasten befestigt, wohingegen das andere Gelenksegment mit dem gegenüberliegenden Wagenkasten verbunden ist. Das andere Gelenksegment umfasst zur Zulassung von Nick- und Wankbewegungen einen sogenannten Wankgelenkkörper, der von einer äußeren Hülse aufgenommen ist. Hierzu besitzt der Wankgelenkkörper einen nach Art einer Olive ausgebildeten Gelenkkörper, der durch zwei Elastomerkissen in der Gehäusehülse aufgenommen wird. Der Wankgelenkkörper zeigt zu beiden Enden Achsstummel auf, durch die der Wankgelenkkörper und mithin das gesamte Lager am Wagenkasten befestigt ist. Dieses kombinierte Nick- und Wanklager ist, wie dies der Name bereits ausdrückt, aufgrund der elastischen nachgiebigen Lagerung des Wankgelenkkörpers in der Gehäusehülse in der Lage sowohl Wank- als auch Nickbewegungen nachgeben zu können.

Eine ähnliche Ausgestaltung ist aus der EP 1 916 180 A bekannt. Die beiden zuletzt genannten Gelenke sind bereits relativ preiswert herstellbar und sie sind insbesondere einsetzbar bei Fahrzeugen, bei denen große Knickwinkel zugelassen sind, wie dies beispielsweise bei Bussen der Fall ist. Bei Schienenfahrzeugen hingegen werden geringere Knickwinkel verlangt.

Aus der DE 20 2006 004 643 U1 ist ein Gelenk bekannt, das zwei Gelenksegmente aufweist, die durch einen Gelenkkörper miteinander in Verbindung stehen. Der Gelenkkörper umfasst eine auf einem Zapfen angeordnete Kalotte, wobei der Zapfen mit dem einen Gelenksegment in Verbindung steht. Das andere Gelenksegment zeigt einen Sattel mit einer korrespondierend zur Kalotte ausgebildeten konkaven Oberfläche, wobei der Sattel die Kalotte aufweist.

Aus der DE 10 2010 046 495 B3 ist ein Gelenk eines Gelenkfahrzeuges mit zwei Gelenksegmenten bekannt, die durch mindestens einen Gelenkkörper miteinander verbunden sind. Hierbei umfasst der Gelenkkörper mindestens einen mit mindestens einer konkaven Oberfläche ausgebildeten Sattel, der von dem einen ersten Gelenksegment aufgenommen wird. Der Gelenkkörper besitzt korrespondierend hierzu mindestens eine Kalotte, die an dem zweiten anderen Gelenksegment angeordnet ist. Die Kalotte ist mit ihrer konvexen Oberfläche auf den Sattel mit der konkaven Oberfläche zugerichtet, wobei Kalotte und Sattel durch einen Zapfen miteinander in Verbindung stehen. Zwischen Sattel und Kalotte ist ein Lagerkörper mit mindestens einer Schicht aus einem Elastomer angeordnet. Dieses Gelenk ist in der Lage sowohl Aufsattellasten als auch Abhebelasten aufzunehmen. Des Weiteren ist das Gelenk in der Lage über den Lagerkörper sowohl Knick-, als auch Nick- und Wankbewegungen zwischen den beiden Gelenksegmenten zu übertragen. Darüber hinaus können radiale Kräfte übertragen werden, wie sie beim Anfahren oder Bremsen der durch das Gelenk verbundenen Fahrzeuge entstehen.

Aus der US 4,867,071 ist ein gattungsgemäßes Gelenk bekannt, bei dem das männliche und das weibliche Gelenksegment durch einen Zapfen miteinander in Verbindung stehen. Für die Bereitstellung von Knickbewegungen ist ein Drehlager vorgesehen, wobei durch das Drehlager auch Nickbewegungen übertragen werden können. Zwischen dem einen männlichen Gelenksegment und dem Zapfen ist ein Elastomerlager vorgesehen, wobei das Elastomerlager zwei metallische Hülsen umfasst, zwischen denen eine Elastomerhülse angeordnet ist. Die innere Metallhülse sitzt hierbei auf dem Zapfen auf. Dieses Elastomerlager bewirkt eine spielfreie Verbindung zwischen den beiden Gelenksegmenten in radialer Richtung, also beim Anfahren und Bremsen der Fahrzeuge.

Die der Erfindung zugrunde liegende Aufgabe besteht darin, ein Gelenk der eingangs genannten Art bereitzustellen, das nicht nur in der Lage ist zwischen den beiden Gelenksegmenten Nick-, Wank- und Knickbewegungen zu übertragen, sondern darüber hinaus auch in der Lage ist Aufsattellasten und Abhebelasten aufzunehmen.

Zur Lösung der Aufgabe wird erfindungsgemäß vorgeschlagen, dass die Gelenkeinrichtung mindestens ein Buchsenlager als Metall-Elastomer-Lager umfasst, das von dem männlichen Gelenksegment aufnehmbar ist, und das in dem männlichen Gelenksegment gegen den Zapfen und hier insbesondere gegen den Bolzen des Zapfens vorspannbar ist, wobei die Gelenkeinrichtung mindestens ein Flanschlager als Metall-Elastomer-Lager umfasst, das zwischen dem männlichen und dem weiblichen Gelenksegment vorgespannt angeordnet ist. Sowohl das mindestens eine Buchsenlager als auch das mindestens eine Flanschlager sorgen dafür, dass sowohl Wank- als auch Nick- und insbesondere auch Knickbewegungen zwischen den beiden Gelenksegmenten, d.h. dem männlichen und dem weiblichen Gelenksegment, übertragen werden können. D.h., die Bewegungen finden nur durch das Buchsenlager und das Flanschlager statt. Weiterhin gilt, dass der Zapfen insgesamt verdrehgesichert durch das weibliche Gelenksegment aufgenommen ist. Der Zapfen umfasst definitionsgemäß einen Bolzen, wobei zu beiden Seiten des Bolzens jeweils eine Kuppelscheibe vorgesehen ist, die jeweils auf dem weiblichen Gelenksegment aufliegt. Über die Kuppelscheiben wird der Bolzen insbesondere durch Schrauben mit dem weiblichen Gelenksegment verbunden.

Vorteilhafte Merkmale und Ausgestaltungen der Erfindung ergeben sich aus den Unteransprüchen.

So ist insbesondere vorgesehen, dass das Buchsenlager und/oder das Flanschlager mehrschichtig aufgebaut ist. Hierdurch wird erreicht, dass sowohl die Kräfte, als auch die Winkel sich auf die einzelnen Schichten des Metall-Elastomer-Lager ausgebildeten Buchsen- und Flanschlagers aufteilen, so dass insbesondere keine der Elastomerschichten eine Belastung erfährt, die zur Schädigung der Elastomerschicht führt. Oder anders ausgedrückt bedeutet dies, dass ohne Beschädigung der Elastomerschichten große Winkeländerungen ermöglicht werden, insbesondere große Knickwinkel bereitgestellt werden.

Das Buchsenlager weist im Einzelnen im Einbauzustand, d. h. im Gebrauchszustand, wechselweise vertikal ausgerichtete Elastomer- und Metallbuchsen auf. Hieraus wird deutlich, dass ein solches Lager aus einer Mehrzahl von hintereinander angeordneten Metallbuchsen ausgebildet ist, zwischen denen jeweils eine Buchse aus einem Elastomer, beispielsweise einem EPDM angeordnet ist.

Um das Buchsenlager vorgespannt mit dem männlichen Gelenksegment zu verbinden, kann vorgesehen sein, das Buchsenlager in Form einer Schlitzbuchse auszubilden, wobei die Schlitzbuchse in einen Spannring eingesetzt wird, wodurch das Buchsenlager gegen den Bolzen des Zapfens vorgespannt wird. Der Spannring kann hierbei Bestandteil des männlichen Gelenksegments sein, d.h., Spannring und männliches Gelenksegment können ein Bauteil bilden. Im Einzelnen ist vorgesehen, dass die Buchsen des Buchsenlagers miteinander stoffschlüssig verbunden sind. Das heißt, dass die Metallbuchsen und die Elastomerbuchsen jeweils miteinander verklebt oder durch Vulkanisation miteinander verbunden sind. Hierbei ist insbesondere vorgesehen, dass die eine innere Elastomerbuchse des Buchsenlagers mit dem Bolzen des Zapfens stoffschlüssig, insbesondere durch Vulkanisation verbunden ist.

Die einzelnen Elastomer- und Metallbuchsen des als Buchsenlager ausgebildeten Metall-Elastomer-Lagers verkürzen sich von dem Zapfen nach außen hin stufenförmig. Hierdurch wird erreicht, dass die Federsteifigkeit und Dehnung bei jeder Elastomerbuchse gleich ist. Bedingt ist dies dadurch, dass der Durchmesser der Elastomerbuchsen nach außen zunimmt, wohingegen die Höhe abnimmt.

Das Flanschlager als Metall-Elastomer-Lager ist ähnlich aufgebaut wie das Buchsenlager, wobei das Flanschlager allerdings im Einbauzustand, insbesondere horizontal ausgerichtet ist. Das Flanschlager umfasst eine Mehrzahl von konzentrisch um den Zapfen angeordneten Metallringen, wobei zwischen den Metallringen Elastomerringe angeordnet sind. Auch hier gilt, dass die Metall- und die Elastomerringe miteinander stoffschlüssig, insbesondere durch Vulkanisation verbunden sind.

Anhand der Zeichnungen wird die Erfindung nachstehend beispielhaft näher erläutert.

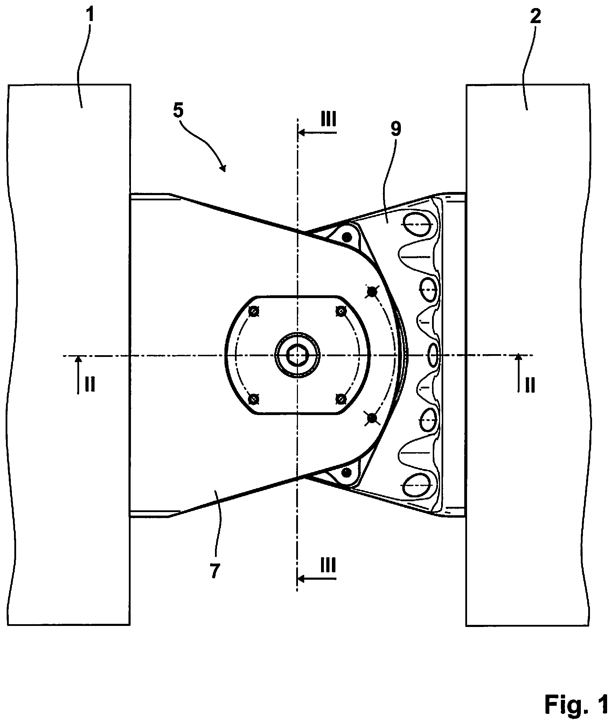

- Fig. 1: zeigt hierbei die beiden Gelenksegmente des Gelenks in einer Draufsicht;
- Fig. 2: zeigt einen Schnitt gemäß der Linie II-II aus Fig. 1;
- Fig. 3: zeigt einen Schnitt gemäß der Linie III-III aus Fig. 1.

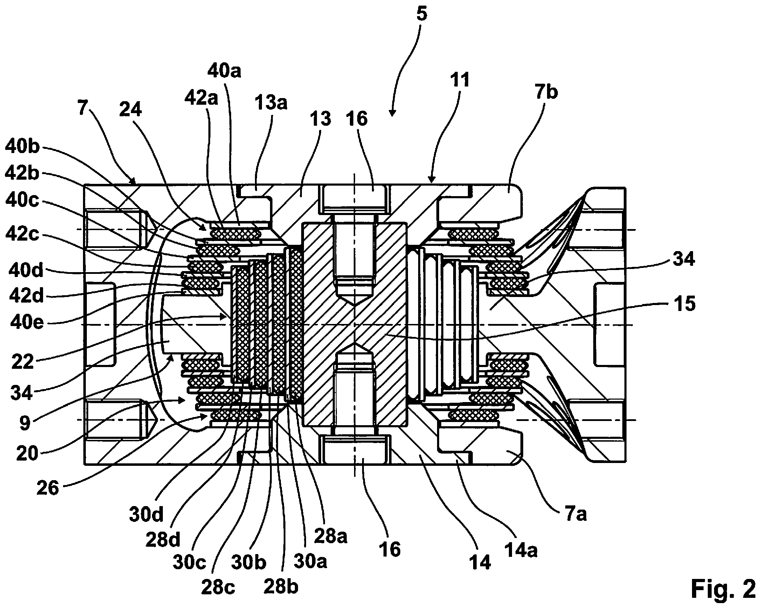

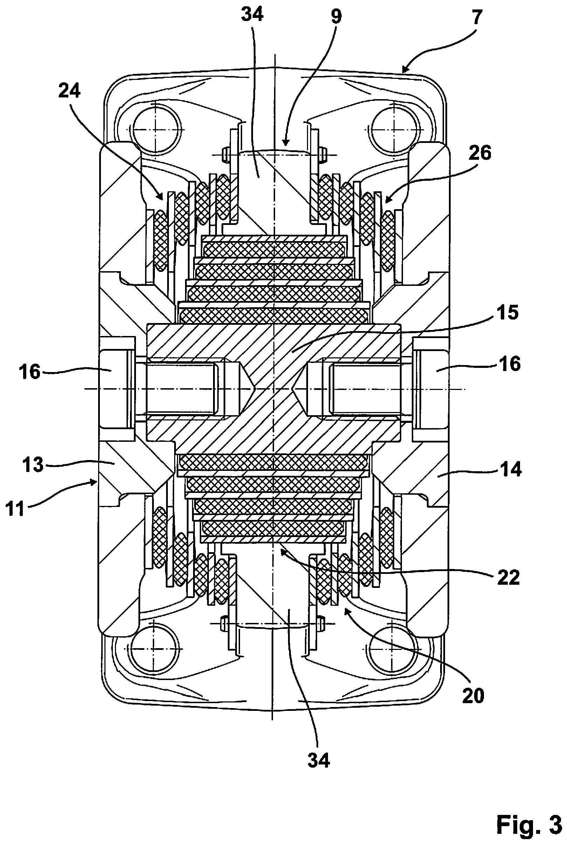

Das zwischen den beiden Fahrzeugteilen 1 und 2 angeordnete Gelenk weist das Bezugszeichen 5 auf. Das Gelenk 5 umfasst das weibliche Gelenksegment 7 und das männliche Gelenksegment 9. Das männliche Gelenksegment 9 wird hierbei durch das weibliche Gelenksegment 7 aufgenommen, wie sich dies in Anschauung der Figuren 2 und 3 ergibt. Die beiden Gelenksegmente 7 und 9 sind durch den Zapfen 11 miteinander verbunden. Der Zapfen 11 umfasst eine erste Kuppelscheibe 13 und eine zweite Kuppelscheibe 14, die mit dem Bolzen 15 mittels Schrauben 16 verbunden sind. Die beiden Kuppelscheiben 13, 14 weisen hierbei jeweils einen Bund 13a, 14a auf, mit dem sie auf den Schenkeln 7a, 7b des weiblichen Gelenksegments 7 aufliegen. Der Zapfen 11 insgesamt wird verdrehfest durch das weibliche Gelenksegment aufgenommen.

Die insgesamt mit 20 bezeichnete Gelenkeinrichtung umfasst das als Metall-Elastomer-Lager ausgebildete Buchsenlager 22 und die beiden als Metall-Elastomer-Lager ausgebildeten Flanschlager 24, 26, wobei die beiden Flanschlager 24, 26 gleich ausgebildet sind.

Das Buchsenlager 22 weist eine Elastomerbuchse 28a auf, die auf dem Bolzen des Zapfens 15 aufvulkanisiert ist. Wechselweise schließen sich an die Elastomerbuchse 28a Metallbuchsen 30a, 30b, 30c und 30d an, zwischen denen jeweils eine weitere Elastomerbuchse 28b, 28c, 28d angeordnet ist. Die Elastomerbuchsen 28a bis 28d können hierbei mit den Metallbuchsen 30a bis 30d stoffschlüssig, insbesondere durch Vulkanisation verbunden sein. Sowohl die Elastomerbuchsen 28a bis 28d als auch die entsprechenden Metallbuchsen 30a bis 30d werden nach außen hin in Bezug auf ihre Höhe kleiner, so dass das Buchsenlager nach außen einen stufenförmigen Verlauf aufweist, mit der Folge, dass bei einer Knickbewegung der beiden Gelenksegmente 7 und 9 relativ zueinander, das Buchsenlager 22 als Metall-Elastomer-Lager eine Federkennlinie mit ansteigendem Verlauf zeigt. Gegen den Bolzen 15 des Zapfens 11 wird das Buchsenlager 22 durch das männliche Gelenksegment vorgespannt. Hierbei ist das Buchsenlager 22 vorzugsweise als Schlitzbuchse ausgebildet, wobei die beiden Enden des als Schlitzbuchse ausgebildeten Buchsenlagers 22 durch das männliche Gelenksegment 9 geschlossen oder nahezu geschlossen werden und das Buchsenlager 22 gegen den Bolzen 15 des Zapfens 11 vorgespannt wird.

Die beiden Flanschlager 24 und 26 sind im Einbauzustand oberhalb und unterhalb des männlichen Gelenksegments 9 jeweils zwischen dem weiblichen Gelenksegment 7 und dem männlichen Gelenksegment 9 eingespannt. Ein jedes dieser beiden Flanschlager 24,26 weist eine Mehrzahl an übereinander und im Einbauzustand horizontal angeordneten Metallringen 40a bis 40e auf, wobei zwischen den Metallringen 40a bis 40e jeweils ein Elastomerring 42a bis 42d angeordnet ist. Auch hier gilt, dass sowohl die Metallringe 40a bis 40 e als auch die Elastomerringe 42a bis 42d eine unterschiedliche Breite aufweisen und einen zum männlichen Gelenksegment 9 nach außen auslaufenden stufenförmigen Verlauf aufweisen.

Die elastische nachgiebige Gelenkeinrichtung 20 ist in der Lage sowohl Knickbewegungen zwischen den beiden Gelenksegmenten 7 und 9 zu übertragen, als auch Wank- und Nickbewegungen.

Darüber hinaus ist die Gelenkeinrichtung 20 in der Lage sowohl Aufsattellasten als auch Abhebelasten aufzunehmen, und von dem einen Gelenksegment 7 auf das andere Gelenksegment 9 zu übertragen.

Das Gelenk 5 ist insofern im Wesentlichen verschleißfrei, zeigt gute Dämpfungswerte hinsichtlich zu übertragender Knick- und Wankbewegungen, und ist darüber hinaus in der Lage Aufsattellasten und Abhebelasten aufzunehmen. Es ist darüber hinaus wartungsfrei und kostengünstig herstellbar.

### Bezugszeichenliste:

- 1: Fahrzeugteil
- 2: Fahrzeugteil
- 5: Gelenk
- 7: weibliches Gelenksegment
- 7a, 7b: Schenkel des weiblichen Gelenksegments
- 9: männliches Gelenksegment
- 11: Zapfen
- 13: Kuppelscheibe
- 13a: Bund
- 14: Kuppelscheibe
- 14a: Bund
- 15: Bolzen
- 16: Schraube
- 20: Gelenkeinrichtung
- 22: als Metall-Elastomer-Lager ausgebildetes Buchsenlager
- 24: als Metall-Elastomer-Lager ausgebildetes Flanschlager
- 26: als Metall-Elastomer-Lager ausgebildetes Flanschlager
- 28a-d: Elastomerbuchse
- 30a-d: Metallbuchse
- 34: Spannring
- 40a-e: Metallring
- 42a-d: Elastomerring

## Patentansprüche

1. Gelenk (5) eines Gelenkfahrzeugs umfassend ein männliches (9) und ein weibliches (7) Gelenksegment, die durch einen Zapfen (11) und durch eine elastisch nachgiebige Gelenkeinrichtung miteinander verbunden sind,
wobei die Gelenkeinrichtung mindestens ein Buchsenlager (22) als Metall-Elastomer-Lager umfasst, das in dem männlichen Gelenksegment (9) aufnehmbar ist, und das auf dem männlichen Gelenksegment (9) gegen den Zapfen (11) vorspannbar ist,
**dadurch gekennzeichnet,**
**dass**
die Gelenkeinrichtung mindestens ein Flanschlager (24, 26) als Metall-Elastomer-Lager umfasst, das zwischen dem männlichen (9) und dem weiblichen Gelenksegment (7) vorgespannt angeordnet ist.

2. Gelenk (5) eines Gelenkfahrzeugs nach Anspruch 1,
**dadurch gekennzeichnet,**
**dass** das Buchsenlager (22) und/oder das Flanschlager (24, 26) mehrschichtig aufgebaut ist.

3. Gelenk (5) eines Gelenkfahrzeugs nach einem der voranstehenden Ansprüche,
**dadurch gekennzeichnet,**
**dass** das Buchsenlager (22) im Einbauzustand wechselweise vertikal ausgerichtete Elastomer- und Metallbuchsen (28a bis 28d; 30a bis 30d) aufweist.

4. Gelenk (5) eines Gelenkfahrzeugs nach einem der voranstehenden Ansprüche,
**dadurch gekennzeichnet,**
**dass** das Buchsenlager (22) in Form einer Schlitzbuchse ausgebildet ist, die durch einen Spannring (34) gegen den Zapfen (11) vorspannbar ist.

5. Gelenk (5) eines Gelenkfahrzeugs nach Anspruch 3 oder 4,
**dadurch gekennzeichnet,**
**dass** die einzelnen Elastomer- und Metallbuchsen (28a bis 28d; 30a bis 30d), des Buchsenlagers (22) miteinander stoffschlüssig verbunden sind.

6. Gelenk (5) eines Gelenkfahrzeugs nach einem der Ansprüche 3 bis 5,
**dadurch gekennzeichnet,**
**dass** eine innere Elastomerbuchse (28a) des Buchsenlagers (22) mit dem Zapfen (11) stoffschlüssig verbunden ist.

7. Gelenk (5) eines Gelenkfahrzeugs nach einem der Ansprüche 3 bis 6,
**dadurch gekennzeichnet,**
**dass** die Elastomer- und Metallbuchsen (28a bis 28d; 30a bis 30d) sich von dem Zapfen (11) nach außen hin stufenförmig verkürzen.

8. Gelenk (5) eines Gelenkfahrzeugs nach einem der Ansprüche 2 bis 7,
**dadurch gekennzeichnet,**
**dass** das Flanschlager (24, 26) eine Mehrzahl von konzentrisch um den Zapfen (11) angeordnete Metallringe (40a bis 40e) aufweist, wobei zwischen den Metallringen (40a bis 40e) Elastomerringe (42a bis 42d) angeordnet sind.

9. Gelenk (5) eines Gelenkfahrzeugs nach Anspruch 8,
**dadurch gekennzeichnet,**
**dass** die Metall- und Elastomerringe (40a bis 40e; 42a bis 42d) miteinander stoffschlüssig verbunden sind.

10. Gelenk (5) eines Gelenkfahrzeugs nach Anspruch 8 oder 9,
**dadurch gekennzeichnet,**
**dass** die Metall- und Elastomerringe (40a bis 40e; 42a bis 42d) im Einbauzustand horizontal ausgerichtet sind.

11. Gelenk (5) eines Gelenkfahrzeugs nach einem der Ansprüche 2 bis 7,
**dadurch gekennzeichnet,**
**dass** zwei Flanschlager (24, 26) vorgesehen sind, wobei jeweils ein Flanschlager oberhalb und unterhalb des männlichen Gelenksegments (9) angeordnet ist.

12. Gelenk (5) eines Gelenkfahrzeugs nach einem der Ansprüche 4 bis 11,
**dadurch gekennzeichnet,**
**dass** der Spannring (34) Bestandteil des männlichen Gelenksegments (9) ist.

13. Gelenk (5) eines Gelenkfahrzeugs nach einem der voranstehenden Ansprüche,
**dadurch gekennzeichnet,**
**dass** der Zapfen (11) einen Bolzen (15) sowie zu beiden Seiten des weiblichen Gelenksegments (7) eine Kuppelscheibe (13, 14) umfasst, wobei jede Kuppelscheibe (13,14) mit dem Bolzen (15) verbunden ist.

14. Gelenk (5) eines Gelenkfahrzeugs nach einem der voranstehenden Ansprüche,
**dadurch gekennzeichnet,**
**dass** der Zapfen (11) insgesamt verdrehgesichert durch das weibliche Gelenksegment (7) aufnehmbar ist.

## Claims

1. A joint (5) of an articulated vehicle comprising a male (9) and a female (7) joint segment, which are connected to one another by a pivot pin (11) and an elastically flexible joint mechanism,
wherein the joint mechanism comprises at least one bush bearing (22) as a metal-elastomer bearing, which can be accommodated in the male joint segment (9) and which can be pre-stressed on the male joint segment (9) against the pivot pin (11),
**characterized in that**
the joint mechanism comprises at least one flange bearing (24, 26) as a metal-elastomer bearing, which is disposed in a pre-stressed manner between the male (9) and the female (7) joint segment.

2. The joint (5) of an articulated vehicle according to claim 1,
**characterized in that**
the bush bearing (22) and/or the flange bearing (24, 26) is constructed in multiple layers.

3. The joint (5) of an articulated vehicle according to one of the aforementioned claims,
**characterized in that**
in the mounted state, the bush bearing (22) comprises alternating, vertically oriented elastomer and metal bushings (28a to 28d; 30a to 30d).

4. The joint (5) of an articulated vehicle according to one of the aforementioned claims,
**characterized in that**
the bush bearing (22) is designed in the form of a slotted bushing, which can be pre-stressed against the pivot pin (11) by a clamping ring (34).

5. The joint (5) of an articulated vehicle according to claim 3 or 4,
**characterized in that**
the individual elastomer and metal bushings (28a to 28d; 30a to 30d) of the bush bearing (22) are cohesively connected with one another.

6. The joint (5) of an articulated vehicle according to one of the claims 3 to 5,
**characterized in that**
an inner elastomer bushing (28a) of the bush bearing (22) is cohesively connected with the pivot pin (11).

7. The joint (5) of an articulated vehicle according to one of the claims 3 to 6,
**characterized in that**
the elastomer and metal bushings (28a to 28d; 30a to 30d) become shorter in the outward direction from the pivot pin (11).

8. The joint (5) of an articulated vehicle according to one of the claims 2 to 7,
**characterized in that**
the flange bearing (24, 26) comprises a plurality of metal rings (40a to 40e) concentrically disposed around the pivot pin (11), wherein elastomer rings (42a to 42d) are disposed between the metal rings (40a to 40e).

9. The joint (5) of an articulated vehicle according to claim 8,
**characterized in that**
the metal and elastomer rings (40a to 40e; 42a to 42d) are cohesively connected with each other.

10. The joint (5) of an articulated vehicle according to claim 8 or 9,
**characterized in that**
in the mounted state, the metal and elastomer rings (40a to 40e; 42a to 42d) are oriented horizontally.

11. The joint (5) of an articulated vehicle according to one of the claims 2 to 7,
**characterized in that**
two flange bearings (24, 26) are provided, wherein respectively one flange bearing is disposed above and below the male joint segment (9).

12. The joint (5) of an articulated vehicle according to one of the claims 4 to 11,
**characterized in that**
the clamping ring (34) is part of the male joint segment (9).

13. The joint (5) of an articulated vehicle according to one of the aforementioned claims,
**characterized in that**
the pivot pin (11) comprises a pin (15) as well as a coupling disc (13, 14) on both sides of the female joint segment (7), wherein each coupling disc (13, 14) is connected with the pin (15).

14. The joint (5) of an articulated vehicle according to one of the aforementioned claims,
**characterized in that**
the pivot pin (11) can be accommodated as a whole in a non-rotating manner in the female joint segment (7).

## Revendications

1. Articulation (5) d'un véhicule articulé comprenant un segment d'articulation mâle (9) et un segment d'articulation femelle (7), qui sont reliés l'un avec l'autre par un pivot (11) et par un dispositif d'articulation élastiquement souple,
où le dispositif d'articulation comprend au moins un palier à douille (22) en tant que palier métal-élastomère qui peut être reçu dans le segment d'articulation mâle (9) et qui peut être précontraint contre le pivot (11) dans le segment d'articulation mâle (9),
**caractérisée en ce que**
le dispositif d'articulation comprend au moins un palier à bride (24, 26) en tant que palier métal-élastomère qui est disposé entre le segment d'articulation mâle (9) et le segment d'articulation femelle (7).

2. Articulation (5) d'un véhicule articulé selon la revendication 1,
**caractérisée en ce que**
le palier à douille (22) et/ou le palier à bride (24, 26) ont une structure multicouches.

3. Articulation (5) d'un véhicule articulé selon l'une des revendications précédentes,
**caractérisée en ce que**
à l'état monté le palier à douille (22) comprend en alternance des douilles élastomères et métalliques (28a à 28d ; 30a à 30d) orientées verticalement.

4. Articulation (5) d'un véhicule articulé selon l'une des revendications précédentes,
**caractérisée en ce que**
le palier à douille (22) prend la forme d'une douille fendue qui peut être précontrainte contre le pivot (11) par un anneau de serrage (34).

5. Articulation (5) d'un véhicule articulé la revendication 3 ou 4,
**caractérisée en ce que**
les douilles métalliques et élastomères individuelles (28a à 28d ; 30a, 30d) du palier à douille (22) sont reliées par liaison de matière.

6. Articulation (5) d'un véhicule articulé selon l'une des revendications 3 à 5,
**caractérisée en ce que**
une douille élastomère (28a) intérieure du palier à douille (22) est reliée par liaison de matière avec le pivot (11).

7. Articulation (5) d'un véhicule articulé selon l'une des revendications 3 à 6,
**caractérisée en ce que**
les douilles métalliques et élastomères (28a à 28d ; 30a à 30d) deviennent plus courtes de manière étagée vers l'extérieur à partir du pivot (11).

8. Articulation (5) d'un véhicule articulé selon l'une des revendications 2 à 7,
**caractérisée en ce que**
le palier à bride (24, 26) comprend une pluralité d'anneaux métalliques (40a à 40e) disposés de manière concentrique autour du pivot (11), où des anneaux élastomères (42a à 42d) sont disposés entre les anneaux métalliques (40a à 40e).

9. Articulation (5) d'un véhicule articulé selon la revendication 8,
**caractérisée en ce que**
le anneaux métalliques et élastomères (40a à 40e ; 42a à 42d) sont reliés les uns aux autres par liaison de matière.

10. Articulation (5) d'un véhicule articulé selon la revendication 8 ou 9,
**caractérisée en ce que**
à l'état monté, les anneaux métalliques et élastomères (40a à 40e ; 42a à 42d) sont orientés horizontalement.

11. Articulation (5) d'un véhicule articulé selon l'une des revendications 2 à 7,
**caractérisée en ce que**
sont prévus deux paliers à bride (24, 26), où un palier à bride respectif est disposé au-dessus et en-dessous du segment d'articulation mâle (9).

12. Articulation (5) d'un véhicule articulé selon l'une des revendications 4à11,
**caractérisée en ce que**
l'anneau de serrage (34) fait partie intégrante du segment d'articulation mâle (9).

13. Articulation (5) d'un véhicule articulé selon l'une des revendications précédentes,
**caractérisée en ce que**
le pivot (11) comprend un boulon (15) ainsi que, des deux côtés du segment d'articulation femelle (7), un disque de couplage (13, 14), où chaque disque de couplage (13,14) est relié au boulon (15).

14. Articulation (5) d'un véhicule articulé selon l'une des revendications précédentes,
**caractérisée en ce que**
le pivot (11) peut être entièrement reçu de manière bloquée en rotation par le segment d'articulation femelle (7).
